# EUROPÄISCHE PATENTSCHRIFT

(11) **EP 2 649 916 B1**
(45) Veröffentlichungstag und Bekanntmachung des Hinweises auf die Patenterteilung: **10.10.2018**
(21) Anmeldenummer: 13156441.1
(22) Anmeldetag: 22.02.2013
(51) Int. Cl.: A47J 31/44

(54) **Kaffeemaschine sowie Tresterbehälter**
Coffee machine and grounds container
Machine à café et récipient à marc

(30) Priorität: 12.04.2012 DE 202012101339 U; 01.02.2013 DE 102013101034
(43) Veröffentlichungstag der Anmeldung: 16.10.2013
(73) Patentinhaber: Eugster/Frismag AG, 8580 Amriswil (CH)
(72) Erfinder: Brändle, Walter, 8592 Uttwil (CH)
(74) Vertreter: Patentanwälte Behrmann Wagner PartG mbB

(56) Entgegenhaltungen:
- EP-A1- 0 283 341
- EP-A1- 2 030 537
- DE-A1-102010 026 017
- US-A1- 2010 224 074

## Beschreibung

Die Erfindung betrifft eine Kaffeemaschine, insbesondere einen Kaffeevollautomaten, gemäß dem Oberbegriff des Anspruchs 1, mit einer eine Brühkammer aufweisenden Brüheinrichtung zum Auslaugen von Kaffeemehl und mit einem, bevorzugt zu Reinigungszwecken entnehmbar angeordneten, Tresterbehälter zur Aufnahme des aus einem Brühvorgang resultierenden Tresterkuchens.

Heutige Kaffeevollautomaten besitzen neben einer Brüheinrichtung mindestens einen Bohnenbehälter ein Mahlwerk zum Mahlen der Kaffeebohnen vor einem Brühvorgang und einen entnehmbar angeordneten Tresterbehälter zur Aufnahme der aus den Brühvorgängen der Brüheinrichtung resultierenden Tresterkuchen. Bei Tresterkuchen handelt es sich um bei dem Brühvorgang ausgelaugtes Kaffeemehl, welches nach dem Brühvorgang in der Brühkammer zu einem relativ festen Formkörper geformt ist. Dieser Formkörper (Tresterkuchen) wird nach dem Brühvorgang aus der Brühkammer in den Tresterbehälter gefördert, wobei herkömmliche Tresterbehälter als einen Boden sowie eine geschlossene Umfangswand aufweisende Kunststoffspritzgussteile ausgebildet sind. Üblicherweise rutscht der Tresterkuchen bei bekannten Kaffeemaschinen über eine Rutsche in den Tresterbehälter, wobei die ersten Tresterkuchen im Regelfall auf den Boden des Behälters fallen und sich die weiteren Tresterkuchen auf diesen stapeln. Die Tresterkuchen überstehen in bekannten Kaffeemaschinen den Überführungsvorgang im Regelfall unbeschädigt und benötigen ein vergleichsweise großes Stauvolumen, so dass die Tresterbehälter nach einer begrenzten Anzahl an Brühvorgängen geleert werden müssen. Dies ist insbesondere dann von Nachteil, wenn die Kaffeeautomaten in Haushalten oder für professionelle Anwendungen genutzt werden, wo vergleichsweise viel Kaffee konsumiert wird.

Aus der DE 10 2008 043 415 A1 ist es bekannt, in einer Kaffeemaschine rotierbare Aufbrechmittel zum Aufbrechen bzw. Zerstören eines Tresterkuchens vorzusehen, wobei eine resultierende Wasser-Brühreste-Mischung hin zu einem Abfluss transportiert wird. Eine Kaffeemaschine mit einem solchen Aufbau benötigt zwingend einen Abwasseranschluss, was für die meisten Haushaltskaffeemaschinen nicht realisierbar sein dürfte. Darüber hinaus ist nicht in jedem Fall das Aufbrechen des sehr robusten Tresterkuchens sichergestellt.

Aus der DE 10 2010 026 017 A1 ist eine alternative Kaffeemaschine bekannt, bei welcher in einem trichterartigen Durchlass für den Trester mit Abstand zu einem Tresterbehälter ein Steg vorgesehen ist, mit Hilfe dessen der von einer Abgabestelle der Brühgruppe abgeworfene Trester zerteilt wird und in der aufgebrochenen Form in den Tresterbehälter gelangt. Nachteilig bei der bekannten Vorrichtung ist die vergleichsweise schwierige Reinigbarkeit des Aufbrechbereichs innerhalb des Trichters. Drüber hinaus ist nachteilig, dass nicht in jedem Fall eine Zerstörung des sehr kompakten bzw. festen Tresterkuchens sichergestellt ist.

Bei der aus der EP 2 030 537 A1 bekannten Kaffeemaschine ist zwischen einem Abstreiferelement einer Brühgruppe und einem Tresterbehälter ein Teileelement angeordnet, welches den vom Abstreifelement abgestreiften Tresterkuchens vor dem Eintritt in den Tresterkuchen in Stücke teilt, um den Trester möglichst raumsparend zwischenlagern zu können. Auch hier ist die aufwändige Reinigbarkeit von Nachteil. Darüber hinaus ist auch bei dieser bekannten Kaffeemaschine nicht sichergestellt, dass in jedem Fall der sehr kompakte bzw. feste Tresterkuchen bei einem Sturz auf die Aufbrechmittel geteilt wird.

Aus der EP 2 030 537 A1 ist eine Kaffeemaschine mit einer eine Brühkammer aufweisenden Brüheinrichtung sowie mit einem Tresterbehälter zur Aufnahme des aus einem Prüfvorgang resultierenden Tresterkuchens bekannt, wobei Aufbrechmittel zum Aufbrechen des Tresterkuchens vorgesehen sind. Ein Kolben zur Beaufschlagung des Kaffeemehls ist rotationssymmetrisch gewölbt ausgebildet, so dass der Tresterkuchen eine entsprechend eingedellte Gegenform erhält.

Die DE 10 2010 026 017 A1 zeigt einteilig mit einem Tresterbehälter ausgebildete Aufbrechmittel zum Aufbrechen eines Tresterkuchens.

Ausgehend von dem vorgenannten Stand der Technik liegt der Erfindung die Aufgabe zugrunde, bei gegebenem Tresterbehältervolumen die Anzahl an möglichen Brühvorgängen ohne ein zwischenzeitliches Entleeren des Tresterbehälters zu erhöhen.

Bevorzugt soll die Aufbrechrate erhöht werden, d.h., es sollte sichergestellt sein, dass möglichst in jedem Fall der robuste Tresterkuchen mittels der Aufbrechmittel aufgebrochen wird, um hierdurch das Tresterbehältervolumen optimal zu nutzen. Zusätzlich soll eine gute Reinigbarkeit der Aufbrechmittel gewährleistet sein.

Diese Aufgabe wird hinsichtlich der Kaffeemaschine, insbesondere einem Kaffeevollautomaten mit den Merkmalen der Ansprüche 1 oder 9, gelöst. Vorteilhafte Weiterbildungen der Erfindung sind in den Unteransprüchen angegeben.

Der Erfindung liegt der Gedanke zugrunde, die Kaffeemaschine derart auszugestalten, dass der, bevorzugt jedoch nicht zwingend zylindrische, alternativ beispielsweise auch quaderförmige, Tresterkuchen, d.h. die vergleichsweise feste Form aus ausgelaugtem Kaffeemehl aufgebrochen wird und dadurch insgesamt weniger Raum benötigt wird, da die resultierenden Tresterkuchenbruchstücke weniger Platz im Tresterbehälter benötigen können, insbesondere weil vorhandene Lücken mittels der resultierenden Bruchstücke besser genutzt bzw. aufgefüllt werden können. Die erfindungsgemäße Kaffeemaschine erreicht dies durch zwei Maßnahmen, die kumulativ realisiert werden müssen. Eine wesentliche Maßnahme zum verlässlichen Erzeugen von Tresterkuchenbruchstücken besteht erfindungsgemäß darin, Mittel zur Einformung einer Sollbrucheinformung in den Tresterkuchen vorzusehen, so dass der Tresterkuchen, insbesondere bei einem Fall oder beim Hineingleiten in den Tresterbehälter erleichtert aufbricht. Wie später noch erläutert werden wird, sind die Mittel zur Einformung der Sollbrucheinformung bevorzugt Bestandteil der Brüheinrichtung und kommen noch weiter bevorzugt bei einem Auspressvorgang am Ende des Brühvorgangs zum Einsatz, so dass der Auspressvorgang gleichzeitig als Einformvorgang nutzbar ist. Zusätzlich zu dem Vorsehen von Mitteln zur Einformung einer Sollbrucheinformung sollen, vorzugsweise im Bereich des Tresterbehälters, Aufbrechmittel zum Aufbrechen des Tresterkuchens vorgesehen werden. Hierbei kann es sich gemäß einer möglichen Ausführungsform um aktive Komponenten, d.h. angetriebene Komponenten handeln, die den Tresterkuchen mit einer Aufbrechkraft beaufschlagen. Bevorzugt ist eine Ausführungsform der Aufbrechmittel als passives Element, auf welches der Tresterkuchen fallen oder gleiten kann, wobei die kinetische Energie des Tresterkuchens, die vorzugsweise aus einer Fall- und/oder Gleitstrecke resultiert, genutzt wird, um dem Tresterkuchen beim Auftreffen desselben auf den Aufbrechmitteln aufzubrechen. Durch die Kombination der Mittel zur Einformung einer Sollbrucheinformung mit aktiven und/oder passiven Aufbrechmitteln werden besonders gute Aufbrechergebnisse erzielt. Besonders bevorzugt ist eine Anordnung, bei der die von den Aufbrechmitteln resultierende Aufbrechkraft zumindest teilweise auf die Sollbrucheinformung wirkt, um so den Tresterkuchen möglichst definiert aufzubrechen.

Die nach dem Konzept der Erfindung ausgebildete Kaffeemaschine weist gegenüber bekannten Kaffeemaschinen erhebliche Vorteile auf. Insbesondere können bei gleichen Tresterbehältervolumen mehr Tresterkuchen aufgenommen werden und dadurch die Anzahl an Brühvorgängen zwischen zwei Entleerungsvorgängen erhöht werden. Auch ist es möglich, bei gleicher Anzahl von Brühvorgängen das Tresterbehältervolumen und damit das gesamte Kaffeemaschinenvolumen zu reduzieren. Besonders bevorzugt handelt es sich bei der Kaffeemaschine um einen so genannten Kaffeevollautomaten, der neben der Brüheinrichtung mindestens einen Bohnenbehälter und ein Mahlwerk zum Mahlen von Kaffeebohnen zu Kaffeemehl vor einem Brühvorgang aufweist. Bevorzugt sind in die Brüheinrichtung Mittel zum Überführen des Tresterkuchens in den Tresterbehälter integriert. Die Brüheinrichtung ist bevorzugt derart ausgebildet, dass diese das aus einem Mahlvorgang resultierende Kaffeemehl in der Brühkammer durch Beaufschlagen mit durch eine Heizeinrichtung gefördertes Heißwasser auslaugen kann.

Besonders gute Bruchergebnisse können erzielt werden, wenn die Mittel zur Einformung einer Sollbrucheinformung derart ausgebildet und angeordnet sind, dass ein Einformabschnitt der Einformmittel zum Einformen der Sollbrucheinformung diese auf mindestens einer, vorzugsweise ausschließlich einer Tresterkuchenstirnseite erzeugt. Anders ausgedrückt wird die Sollbrucheinformung vorzugsweise auf einer Stirnseite des Tresterkuchens erzeugt, um den Tresterkuchen erleichtert entlang dieser Sollbrucheinformung aufbrechen zu können.

Besonders bevorzugt ist es, wenn der Einformabschnitt der Einformmittel die Brühkammer begrenzt, wobei der mindestens eine Einformabschnitt beispielsweise als rippenförmige Erhebung am Filtersieb und/oder am Brühkammerboden vorgesehen sein kann. Bevorzugt wird der Brühkammerboden dabei von einem Ausstoßer zum Ausstoßen des Tresterkuchens aus der Brühkammer nach einem Brühvorgang gebildet, so dass der Brühkammerboden axial in die Brühkammer hinein bzw. relativ zu der Brühkammerumfangswand verstellbar ist. Bevorzugt wird die Einformung während des Ausstoßens und/oder vorher bei einem mechanischen Auspressschritt des Tresterkuchens in diesen eingeformt.

Gute Aufbrechergebnisse können erzielt werden, wenn die Mittel zum Einformen der Sollbrucheinformung, insbesondere ein entsprechender Einformabschnitt der Einformmittel, derart ausgebildet sind, dass eine linienförmige oder rinnenförmige, bevorzugt geradlinige, vorzugsweise sich zumindest näherungsweise über den gesamten Tresterkuchendurchmesser erstreckende, Sollbrucheinformung resultiert, so dass der Tresterkuchen im Regelfall in zwei, vorzugsweise, zumindest näherungsweise, gleich große Tresterkuchenteile beim Fallen oder Gleiten in den Tresterbehälter, vorzugsweise beim Auftreffen auf Aufbrechmittel, zerfällt.

Wie eingangs erwähnt, gibt es im Hinblick auf die konkrete Ausgestaltung der Aufbrechmittel unterschiedliche Möglichkeiten. So ist es denkbar, diese den Tresterkuchen aktiv aufbrechend auszubilden, indem die Aufbrechmittel aktiv den Tresterkuchen mit einer Aufbrechkraft beaufschlagen. So können die Aufbrechmittel beispielsweise eine Druckluftdüse zum Beaufschlagen des Tresterkuchens mit Druckluft oder einem sonstigen Druckgas ausgebildet sein und/oder Wasserstrahlbeaufschlagungsmittel umfassen, um den Tresterkuchen mittels eines Wasserstrahls aufzubrechen und/oder Dampfstrahlbeaufschlagungsmittel aufweisen, um den Tresterkuchen mittels eines Dampfstrahls aufzubrechen. Auch ist es denkbar, die Aufbrechmittel derart auszubilden, dass diese den Tresterkuchen mit einem mechanischen Schlag beaufschlagen und/oder dass die Aufbrechmittel ein Messer oder einen Keil umfassen, der aktiv in den Tresterkuchen hineinbewegbar ist.

Besonders bevorzugt ist es jedoch, wenn die Aufbrechmittel, ganz besonders bevorzugt ausschließlich, passiv auf den Tresterkuchen einwirkend ausgebildet und derart angeordnet sind, dass der Tresterkuchen bei der Überführung aus der Brühkammer in den Tresterbehälter, insbesondere rutschend oder fallend, auf die Aufbrechmittel auftrifft. Bevorzugt befinden sich die Aufbrechmittel zu diesem Zweck unterhalb einer vorzugsweise vorgesehenen Rutsche, über die der Tresterkuchen in Richtung Tresterbehälter rutschen und mit einem letzten Abschnitt auf die Aufbrechmittel fallen kann, wobei in diesem Fall potenzielle Energie in kinetische Energie umgewandelt wird, die genutzt wird, um beim Auftreffen auf die Aufbrechmittel den Tresterkuchen in mehrere, insbesondere zwei, Teilstücke aufzubrechen.

Wie ebenfalls eingangs bereits angedeutet, ist es besonders zweckmäßig, wenn die Ausbrechmittel derart angeordnet sind, dass diese unmittelbar auf die Sollbrucheinformung einwirken. Sind die Aufbrechmittel beispielsweise keil- oder rippenförmig ausgebildet, ist es besonders zweckmäßig, wenn sich dieser Keil oder die Rippe entlang der, vorzugsweise linienförmigen, Sollbrucheinformung erstreckt, um über einen möglichst großen Flächenabschnitt unmittelbar in die Sollbrucheinformung einzuwirken.

Ganz besonders bevorzugt ist es, insbesondere bei der Ausbildung der Aufbrechmittel als passiv wirkende Aufbrechmittel, wenn diese eine, beispielsweise linien-, kreuz- oder sternförmige Aufbrechfläche anbieten, die noch weiter bevorzugt als Kante, insbesondere einer Keilform, ausgebildet ist, die von dem Tresterbehälterboden beabstandet ist. Dabei ist es möglich, dass die Aufbrechmittel vom Tresterboden her aufragen, derart, dass die Aufbrechfläche oberhalb des Tresterbodens angeordnet ist. Auch ist es denkbar, dass die Aufbrechmittel von einer Umfangswand her in einen Bereich oberhalb des Tresterbodens ragen. Ganz besonders bevorzugt ist es, wenn die Aufbrechfläche zwar oberhalb, d.h. mit Abstand zum Tresterboden angeordnet ist, jedoch unterhalb einer oberen Umfangswandkante des Tresterbehälters, um zu verhindern, dass Bruchstücke des auf die Aufbrechfläche der Aufbrechmittel auftreffenden Tresterbehälters neben den Tresterbehälter fallen können. Insbesondere für den Fall, dass eine an der oberen Umfangswandkante des Tresterbehälters anliegende Wand in der Kaffeemaschine vorgesehen ist, die ein Hinausfallen von Tresterkuchenabschnitten verhindern, ist es auch denkbar, die Aufbrechfläche auf Höhe der Umfangswandkante des Tresterbehälters anzuordnen. Die Flächenerstreckung der Aufbrechfläche sollen kleiner sein als die Grundfläche des Tresterkuchens und als die Tresterstirnseitenoberfläche.

Besonders zweckmäßig, insbesondere im Hinblick auf eine gute Reinigbarkeit und im Hinblick auf eine robuste Ausführung ist es, wenn die, insbesondere passiven Aufbrechmittel einteilig mit dem, vorzugsweise als Kunststoffspritzgussteil ausgebildeten, Tresterbehälter ausgebildet sind, wobei es möglich ist, dass die Aufbrechmittel vom Tresterbehälterboden aufragen und/oder seitlich nach innen von einer Umfangswand abragen.

Für die Realisierung der weiterbildungsgemäßen Lösung der integralen Ausbildung der Aufbrechmittel mit dem Tresterbehälter ist es besonders vorteilhaft die am Tresterbehälter ausgebildeten Aufbrechmittel mit Einformmitteln zur Einformung einer Sollbrucheinformung in den Tresterkuchen zu kombinieren und insbesondere derart relativ zueinander anzuordnen, dass unmittelbar eine Krafteinwirkung auf die resultierende Sollbruchstelle im Tresterkuchen resultiert, indem der Tresterkuchen mit seiner Sollbrucheinformung auf die einteilig mit dem Tresterbehälter ausgebildeten Aufbrechmittel auftrifft.

Alternativ ist es auch denkbar, separat von dem Tresterbehälter ausgebildete Aufbrechmittel vorzusehen, beispielsweise eine Einhänge- oder Seilkonstruktion (insbesondere Metallseilkonstruktion), die sich zwischen zwei, insbesondere einander gegenüberliegenden Umfangswandabschnitten des Tresterbehälters erstreckt. Wie eingangs bereits angedeutet, ist es besonders zweckmäßig, wenn der Brüheinrichtung eine Rutsche zugeordnet ist, über die der Tresterkuchen in Richtung Tresterbehälter gleiten kann, wobei besonders bevorzugt am Ende der Tresterrutsche ein Fallabschnitt anschließt, in welchem der Tresterkuchen, vorzugsweise ohne oder nur mit geringer Berührung von weiteren Bauteilen der Kaffeemaschine, näherungsweise frei nach unten auf die Aufbrechmittel fallen kann. Bevorzugt überragt die Tresterrutsche eine obere Umfangswandkante der Umfangswand des Tresterbehälters nach innen, insbesondere in einem Bereich oberhalb des Tresterbehälters, um somit den Tresterbehälter entnehmen zu können, ohne dass dieser an der Rutsche anstößt und ohne die Rutsche aktiv verstellen zu müssen.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine Brüheinrichtung einer Kaffeemaschine, mit integrierten Sollbrucheinform mitteln,
- Fig. 2: einen Tresterbehälter mit angeformten Aufbrechmitteln, und
- Fig. 3: einen Tresterkuchen mit eingeformter Sollbrucheinformung.

In den Figuren sind gleiche Elemente und Elemente mit der gleichen Funktion mit den gleichen Bezugszeichen gekennzeichnet.

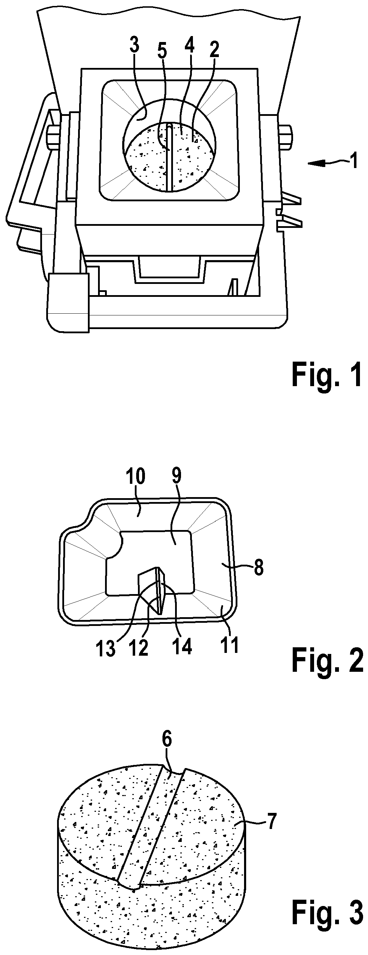

In Fig. 1 ist eine Brüheinrichtung 1 für eine als Kaffeevollautomat ausgebildete Kaffeemaschine gezeigt. Die Brüheinrichtung 1 umfasst eine Brühkammer 2 mit einer umfangsgeschlossenen Brühkammerumfangswand 3 und einem Brühkammerboden 4 mit einer Vielzahl von Öffnungen, durch die Heißwasser zum Auslaugen des in der Brühkammer 2 befindlichen Kaffeemehls in die Brühkammer 2 hineingefördert werden kann. In der Ansicht nicht gezeigt ist ein Filter zum Verschließen der Brühkammer 2 auf der von dem Brühkammerboden 4 abgewandten Seite. Dieser ist bevorzugt an einem, noch weiter bevorzugt gefedert gelagerten Brühkolben angeordnet. In dem gezeigten Ausführungsbeispiel ist der Brühkammerboden 4 gleichzeitig ein Ausstoßerboden, der in der Zeichnungsebene nach oben in die Brühkammer 2 hinein bewegbar ist.

Wie aus Fig. 1 zu erkennen ist, sind an den Brühkammerboden 4 aus Metall Mittel 5 in Form einer langgestreckten Rippe zum Einformen einer Sollbrucheinformung in den Tresterkuchen angeformt. Die Mittel 5 erstrecken sich über den gesamten Durchmesser der zylindrischen Brühkammer.

Mittels der Mittel 5 zum Einformen einer Sollbrucheinformung ist eine in Fig. 5 gezeigte, stirnseitig Sollbrucheinformung 6 in einem Tresterkuchen 7 einformbar.

Dieser wird in dem gezeigten Ausführungsbeispiel mit Hilfe des Brühkammerbodens 4 nach erfolgtem Brühvorgang ausgestoßen und kann dann über eine nicht dargestellte Rutsche in Richtung eines in Fig. 2 gezeigten Tresterbehälters 8 rutschen. In dem gezeigten Ausführungsbeispiel ist der Tresterbehälter 8 als einteiliges Kunststoffspritzgussteil ausgebildet, welches entnehmbar, insbesondere in einer Schublade der Kaffeemaschine aufnehmbar ist.

Der Tresterbehälter 8 weist einen Tresterbehälterboden 9 auf sowie eine davon nach oben abragende, umfangsgeschlossene Umfangswand 10 mit einer umlaufenden oberen Umfangswandkante 11.

Der Tresterbehälter 8 umfasst ferner integrale Aufbrechmittel 12, die in dem gezeigten Ausführungsbeispiel als passive Aufbrechmittel ausgebildet sind und eine linienförmige Aufbrechfläche auf der Oberseite einer keilförmigen Anformung 14 aufweisen. Die Aufbrechfläche 13 erstreckt sich in dem gezeigten Ausführungsbeispiel parallel zum Tresterbehälterboden 9 und ist mit Abstand zu diesem angeordnet. Die Anformung 14 verjüngt sich ausgehend vom Tresterbehälterboden 9 hin zur Aufbrechfläche 13, die wiederum unter einem Winkel von etwa 90° zur Umfangswand 10 angeordnet ist und sich ausgehend von dieser nach innen in Richtung Behältermitte erstreckt. Wie sich aus Fig. 2 ergibt, ist die Aufbrechfläche 13 nicht nur mit Abstand zum Tresterbehälterboden 9, sondern auch mit Abstand (Höhenabstand) zur oberen Umfangswandkante 11 angeordnet, befindet sich also höhenmäßig zwischen dem Höheniveau der oberen Umfangswandkante 11 und den Tresterbodenabschnitten 9. Dieser ist in dem gezeigten Ausführungsbeispiel aus Gründen der leichten Reinigbarkeit glatt und eben ausgeführt.

In dem gezeigten Ausführungsbeispiel sind die Aufbrechmittel 12 so angeordnet, dass der Tresterkuchen 7 auf seinem Weg in Richtung Tresterbehälterboden 9 auf die Aufbrechfläche 13 fällt und in dem konkreten Ausführungsbeispiel derart, dass sich die Aufbrechfläche 13 zumindest näherungsweise entlang der Längserstreckung der geradlinigen sowie rinnenförmigen Sollbrucheinformung 6 erstreckt.

### Bezugszeichenliste

- 1: Brüheinrichtung
- 2: Brühkammer
- 3: Brühkammerumfangswand
- 4: Brühkammerboden
- 5: Mittel zum Einformen einer Sollbrucheinformung
- 6: Sollbrucheinformung
- 7: Tresterkuchen
- 8: Tresterbehälter
- 9: Tresterbehälterboden
- 10: Umfangswand des Tresterbehälters
- 11: Obere Umfangswandkante
- 12: Aufbrechmittel
- 13: Aufbrechfläche
- 14: Anformung

## Patentansprüche

1. Kaffeemaschine, insbesondere Kaffeevollautomat, mit einer eine Brühkammer (2) aufweisenden Brüheinrichtung (1), zum Auslaugen von Kaffeemehl und mit einem, bevorzugt zu Reinigungszwecken entnehmbar angeordneten, Tresterbehälter (8) zur Aufnahme des aus einem Brühvorgang resultierenden Tresterkuchens (7), wobei Aufbrechmittel (12) zum Aufbrechen des Tresterkuchens (7) vorgesehen sind
**dadurch gekennzeichnet,**
**dass** Mittel (5) zur Einformung einer Sollbrucheinformung (6) in den Tresterkuchen (7) vorgesehen sind.

2. Kaffeemaschine nach Anspruch 1,
**dadurch gekennzeichnet,**
**dass** die Mittel (5) zur Einformung einer Sollbrucheinformung (6) einen Einformabschnitt zum Einformen der Sollbrucheinformung (6) in mindestens eine Tresterkuchenstirnseite aufweisen.

3. Kaffeemaschine nach Anspruch 2,
**dadurch gekennzeichnet,**
**dass** der Einformabschnitt die Brühkammer (2) begrenzt und vorzugsweise Bestandteil eines Filtersiebes und/oder eines Brühkammerbodens (4) ist.

4. Kaffeemaschine nach einem der vorhergehenden Ansprüche,
**dadurch gekennzeichnet,**
**dass** die Mittel (5) zum Einformen einer Sollbrucheinformung (6) zum Einformen einer linienförmigen oder rinnenförmigen Sollbrucheinformung (6) ausgebildet sind.

5. Kaffeemaschine nach einem der vorhergehenden Ansprüche,
**dadurch gekennzeichnet,**
**dass** die Aufbrechmittel (12) den Tresterkuchen (7) aktiv, insbesondere durch Druckluftbeaufschlagung und/oder Wasserstrahlbeauschlagung und/oder Dampfstrahlbeaufschlagung und/oder mechanischer Schlagbeaufschlagung aufbrechend ausgebildet sind.

6. Kaffeemaschine nach einem der vorhergehenden Ansprüche,
**dadurch gekennzeichnet,**
**dass** die Aufbrechmittel (12) passiv auf den Tresterkuchen (7) einwirkend ausgebildet und derart angeordnet sind, dass der Tresterkuchen (7) bei der Überführung aus der Brühkammer (2) in den Tresterbehälter (8), insbesondere rutschend oder fallend, auf die Aufbrechmittel (12) auftrifft.

7. Kaffeemaschine nach einem der vorhergehenden Ansprüche,
**dadurch gekennzeichnet,**
**dass** die Aufbrechmittel (12) derart relativ zu den Mitteln (5) zur Sollbrucheinformung, angeordnet sind, dass eine von den Aufbrechmitteln (12) resultierende Aufbrechkraft auf die Sollbrucheinformung (6) wirkt.

8. Kaffeemaschine nach Anspruch 7,
**dadurch gekennzeichnet,**
**dass** die Aufbrechmittel (12) derart angeordnet sind, dass die Aufbrechkraft auf die Sollbrucheinformung (6) wirkt, in dem die Aufbrechmittel (12) unmittelbar auf die Sollbrucheinformung (6) einwirkend ausgebildet und/oder angeordnet sind.

9. Kaffeemaschine nach einem der vorhergehenden Ansprüche,
**dadurch gekennzeichnet,**
**dass** die Aufbrechmittel (12) einteilig mit dem, vorzugsweise als Kunststoffspritzgussteil ausgebildeten, Tresterbehälter (8) ausgebildet sind.

10. Kaffeemaschine nach einem der vorhergehenden Ansprüche,
**dadurch gekennzeichnet,**
**dass** die Aufbrechmittel (12) eine Aufbrechfläche (13) aufweisen, die von einem Tresterbehälterbodenabschnitt (9) beabstandet ist, derart, dass sich die Aufbrechfläche (13) in einem Bereich zwischen dem Tresterbehälterboden (9) und einer oberen Umfangswandkante (11) befindet.

11. Kaffeemaschine nach Anspruch 10,
**dadurch gekennzeichnet,**
**dass** die Aufbrechfläche (13) als linien- oder kreuzförmige Aufbrechkante ausgebildet ist.

12. Kaffeemaschine nach Anspruch 10 oder 11,
**dadurch gekennzeichnet,**
**dass** die Aufbrechmittel (12) an eine Umfangswand (10) des Tresterbehälters (8) angeformt sind und sich in den Tresterbehälter (8) hinein erstrecken und/oder dass sich die Aufbrechmittel (12) aus Richtung des Tresterbehälterbodens (9) in Richtung oberer Umfangswandkante (11) erstrecken.

13. Kaffeemaschine nach einem der vorhergehenden Ansprüche,
**dadurch gekennzeichnet,**
**dass** der Brüheinrichtung (1) eine Rutsche zugeordnet ist, über die der Tresterkuchen (7) in Richtung Tresterbehälter (8) gleiten kann.

14. Kaffeemaschine nach Anspruch 13,
**dadurch gekennzeichnet,**
**dass** sich die Rutsche in einen Bereich oberhalb der Aufbrechmittel (12) erstreckt, so dass der Tresterkuchen (7) von der Rutsche auf die Aufbrechmittel (12) gleiten oder fallen kann.

## Claims

1. A coffee machine, in particular a fully automatic coffee machine, comprising a brewing unit (1) having a brewing chamber (2) and serving to leech coffee grounds, and comprising a leeched-grounds container (8) which serves to receive the leeched-grounds cake (7) resulting from a brewing process and which is preferably disposed so as to be removable for cleaning purposes, breakup means (12) for breaking up the leeched-grounds cake (7) being provided,
**characterized in that**
means (5) for impressing a predetermined breaking impression (6) into the leeched-grounds cake (7) are provided.

2. The coffee machine according to claim 1,
**characterized in that**
the means (5) for impressing a predetermined breaking impression (6) have an impressing portion for impressing the predetermined breaking impression (6) into at least one face side of the leeched-grounds cake.

3. The coffee machine according to claim 2,
**characterized in that**
the impressing portion limits the brewing chamber (2) and is preferably part of a filter screen and/or of a brewing-chamber bottom (4).

4. The coffee machine according to any one of the preceding claims,
**characterized in that**
the means (5) for impressing a predetermined breaking impression (6) are designed to impress a linear or groove-shaped predetermined breaking impression (6).

5. The coffee machine according to any one of the preceding claims,
**characterized in that**
the breakup means (12) are designed to actively break up the leeched-grounds cake (7), in particular by applying pressure and/or by applying a water jet and/or by applying a steam jet and/or by applying a mechanical impact.

6. The coffee machine according to any one of the preceding claims,
**characterized in that**
the breakup means (12) are designed to passively act on the leeched-grounds cake (7) and are disposed in such a manner that the leeched-grounds cake (7) hits the breakup means (12) when it is transferred from the brewing chamber (2) into the leeched-grounds container (8), in particular by sliding or dropping.

7. The coffee machine according to any one of the preceding claims,
**characterized in that**
the breakup means (12) are disposed relative to the means (5) for impressing the predetermined breaking impression in such a manner that a breakup force resulting from the breakup means (12) acts on the predetermined breaking impression (6).

8. The coffee machine according to claim 7,
**characterized in that**
the breakup means (12) are disposed in such a manner that the breakup force acts on the predetermined breaking impression (6) by the breakup means (12) being designed and/or disposed so as to act directly on the predetermined breaking impression (6).

9. The coffee machine according to any one of the preceding claims,
**characterized in that**
the breakup means (12) are formed in one piece with the leeched-grounds container (8), which preferably is a plastic injection-molded part.

10. The coffee machine according to any one of the preceding claims,
**characterized in that**
the breakup means (12) have a breakup surface (13) which is spaced apart from a bottom portion (9) of the leeched-grounds container in such a manner that the breakup surface (13) is located in an area between the bottom (9) of the leeched-grounds container and an upper edge (11) of a circumferential wall.

11. The coffee machine according to claim 10,
**characterized in that**
the breakup surface (13) is formed as a linear or cruciform breakup edge.

12. The coffee machine according to claim 10 or 11,
**characterized in that**
the breakup means (12) are formed on a circumferential wall (10) of the leeched-grounds container (8) and extend into the leeched-grounds container (8) and/or that the breakup means (12) extend from the direction of the bottom (9) of the leeched-grounds container in the direction of the upper edge (11) of the circumferential wall.

13. The coffee machine according to any one of the preceding claims,
**characterized in that**
a chute via which the leeched-grounds cake (7) can slide in the direction of the leeched-grounds container (8) is associated with the brewing unit (1).

14. The coffee machine according to claim 13,
**characterized in that**
the chute extends into an area above the breakup means (12), allowing the leeched-grounds cake (7) to slide or drop from the chute onto the breakup means (12).

## Revendications

1. Machine à café, notamment une machine à café entièrement automatique, comprenant une unité de percolation (1) ayant une chambre de percolation (2) et servant à lessiver du café moulu, et comprenant un récipient de marc (8) qui est destiné à recevoir le gâteau de marc (7) résultant d'un processus de percolation et qui est disposé de préférence de manière amovible à des fins de nettoyage, des moyens de rupture (12) destinés à rompre le gâteau de marc (7) étant prévus,
**caractérisée en ce que**
des moyens (5) destinés à former une empreinte (6) destinée à la rupture dans le gâteau de marc (7) sont prévus.

2. Machine à café selon la revendication 1,
**caractérisée en ce que**
les moyens (5) destinés à former une empreinte (6) destinée à la rupture ont une partie de formation d'empreinte destinée à former l'empreinte (6) destinée à la rupture dans au moins une face frontale du gâteau de marc.

3. Machine à café selon la revendication 2,
**caractérisée en ce que**
la partie de formation d'empreinte délimite la chambre de percolation (2) et fait partie de préférence d'un filtre et/ou d'un fond (4) de la chambre de percolation.

4. Machine à café selon l'une quelconque des revendications précédentes,
**caractérisée en ce que**
les moyens (5) destinés à former une empreinte (6) destinée à la rupture sont configurés pour former une empreinte (6) destinée à la rupture en forme de ligne ou de gouttière.

5. Machine à café selon l'une quelconque des revendications précédentes,
**caractérisée en ce que**
les moyens de rupture (12) sont configurés pour rompre le gâteau de marc (7) de manière active, notamment en appliquant de la pression et/ou en appliquant un jet d'eau et/ou en appliquant un jet de vapeur et/ou en appliquant un choc mécanique.

6. Machine à café selon l'une quelconque des revendications précédentes,
**caractérisée en ce que**
les moyens de rupture (12) sont configurés pour agir sur le gâteau de marc (7) de manière passive et sont disposés de telle manière que le gâteau de marc (7) percute contre les moyens de rupture (12) lors du transfert depuis la chambre de percolation (2) dans le récipient de marc (8), notamment de manière glissante ou tombante.

7. Machine à café selon l'une quelconque des revendications précédentes,
**caractérisée en ce que**
les moyens de rupture (12) sont disposés par rapport aux moyens (5) destinés à former l'empreinte destinée à la rupture de telle manière qu'une force de rupture résultant des moyens de rupture (12) agit sur l'empreinte (6) destinée à la rupture.

8. Machine à café selon la revendication 7,
**caractérisée en ce que**
les moyens de rupture (12) sont disposés de telle manière que la force de rupture agit sur l'empreinte (6) destinée à la rupture par les moyens de rupture (12) étant configurés et/ou disposés de manière à agir directement sur l'empreinte (6) destinée à la rupture.

9. Machine à café selon l'une quelconque des revendications précédentes,
**caractérisée en ce que**
les moyens de rupture (12) et le récipient de marc (8) sont formés d'un seul tenant, ledit récipient de marc (8) étant de préférence une pièce en matière plastique moulée par injection.

10. Machine à café selon l'une quelconque des revendications précédentes,
**caractérisée en ce que**
les moyens de rupture (12) ont une surface de rupture (13) qui est espacée d'une partie de fond (9) du récipient de marc de telle manière que la surface de rupture (13) est disposée dans une zone entre le fond (9) du récipient de marc et un bord supérieur (11) d'une paroi circonféren tielle.

11. Machine à café selon la revendication 10,
**caractérisée en ce que**
la surface de rupture (13) est formée comme bord de rupture linéaire ou cruciforme.

12. Machine à café selon la revendication 10 ou 11,
**caractérisée en ce que**
les moyens de rupture (12) sont formés sur une paroi circonférentielle (10) du récipient de marc (8) et s'étendent dans le récipient de marc (8) et/ou **en ce que** les moyens de rupture (12) s'étendent de la direction du fond (9) du récipient de marc dans la direction du bord supérieur (11) de la paroi circonférentielle.

13. Machine à café selon l'une quelconque des revendications précédentes,
**caractérisée en ce qu'**
une glissière par laquelle le gâteau de marc (7) peut glisser dans la direction du récipient de marc (8) est associé à l'unité de percolation (1).

14. Machine à café selon la revendication 13,
**caractérisée en ce que**
la glissière s'étend dans une zone au-dessus des moyens de rupture (12), permettant au gâteau de marc (7) de glisser ou tomber de la glissière sur les moyens de rupture (12).
